Europäisches Patentamt

European Patent Office

Office européen des brevets

(11) Veröffentlichungsnummer: **0 064 621**
**A2**

(12) **EUROPÄISCHE PATENTANMELDUNG**

(21) Anmeldenummer: 82103284.4

(22) Anmeldetag: 20.04.82

(51) Int. Cl.³: **G 01 V 3/12**

(30) Priorität: 21.04.81 HU 102281

(43) Veröffentlichungstag der Anmeldung:
17.11.82 Patentblatt 82/46

(84) Benannte Vertragsstaaten:
AT BE CH DE FR GB IT LI LU NL SE

(71) Anmelder: A Magyar Tudományos Akadémia Müszaki
Fizikai Kutato Intézete
Foti ut 56.
Budapest IV.(HU)

(72) Erfinder: Mojzes, Imre, Dr., Dipl.-Ing.
Radnoti ut. 11
HU-1137 Budapest(HU)

(72) Erfinder: Oláh, Antal
Dozsa Gyoergy ut. 51
HU-1041 Budapest(HU)

(74) Vertreter: Patentanwälte Viering & Jentschura
Steinsdorfstrasse 6
D-8000 München 22(DE)

(54) Detektion von bewegten festen oder flüssigen Einzelkörpern mit Mikrowellen.

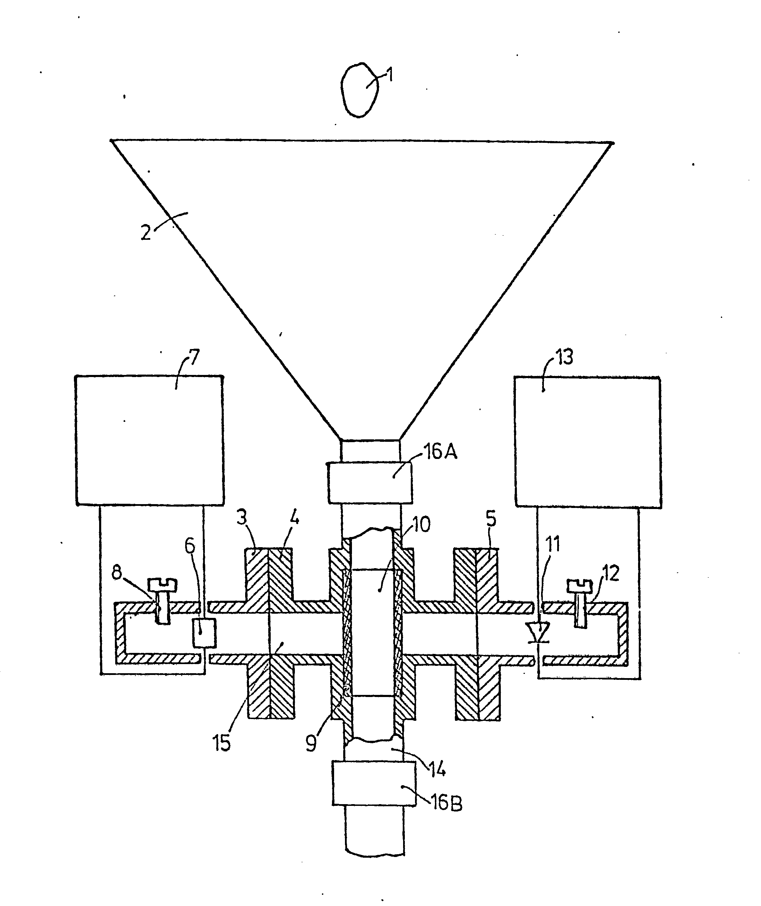

(57) Nachweisen von bewegten festen oder flüssigen Einzelkörpern (1) mit Mikrowellen, wozu der Durchgang der Einzelkörper durch einen bestimmten Raumabschnitt (10) dadurch gemessen wird, daß in einem diesen enthaltenden Resonator (15) ein Mikrowellenfeld erzeugt und die Änderung des Feldes aufgrund des Durchgangs des Einzelkörpers (1), dessen Material ein Halbleiter, ein Isolator oder die Kombination von diesen Materialien sein kann, mittels einer Registrierdiode (11) abgefühlt wird. Die Änderung des Feldes wird von dieser Diode (11) in eine Spannungsänderung umgewandelt, die mit wenigstens einer Referenzspannung verglichen wird. Der von dem Einzelkörper (1) durchlaufene Raumabschnitt (10) ist von einem den Resonator (15) kreuzenden Rohr (9) aus Isoliermaterial umgrenzt (Fig. 1).

EP 0 064 621 A2

Nachweisen von bewegten festen oder flüssigen
Einzelkörpern mit Mikrowellen


Der Gegenstand der Erfindung ist ein Verfahren und eine
Vorrichtung zum Nachweisen von durch einen Raumabschnitt
bewegten festen oder flüssigen Einzelkörpern.

In der Praxis besteht eine häufig vorkommende Aufgabe darin, den Durchgang von Einzelkörpern durch einen abgeschlossenen Raumabschnitt mit großer Zuverlässigkeit anzuzeigen.

Der Einzelkörper kann ein Werkstück sein, welches auf jeder
Maschine einer Herstellungsstraße bearbeitet wird, oder er
kann ein Flüssigkeitstropfen sein, welchen man zum Zwecke
der entsprechenden Steuerung eines chemischen Prozesses
tropfenweise zu einer anderen Flüssigkeit gibt.

Eine ähnliche Aufgabe muß man auch beim Blutspenden lösen.
Diese Meß- und Zählaufgaben tauchen bei der Behandlung und
Kontrolle der unterschiedlichsten Materialien - der Metalle,
der Halbleiter, der Isoliermaterialien oder bei deren
Kombinationen, und Einzelkörpern aus sonstigen festen
Materialien oder mit flüssigem Aggregatzustand auf. Die
kontinuierlichen Strömungen gasförmiger Stoffe - die den
zur Verfügung stehenden Raum vollständig ausfüllen - sind
in für sich verschiedene Teile nicht trennbar, so daß sie
hier nicht betrachtet werden. Vorliegend wird daher das
Registrieren des Durchgangs von Gegenständen betrachtet,
die aus beliebigem Material, mit festem oder flüssigem
Aggregatzustand, aus diskreten Stoffmengen bestehen - das
heißt mit diskretem, in sich abgeschlossenen Volumen, jedoch beliebiger Form. Solche Gegenstände werden hier mit "Einzelkörper" bezeichnet. Zusätzlich zu den oben genannten Beispielen wird die Weise der Signalgebung an einem Beispiel einer Bearbeitungsmaschine, vorzüglich einer Preßmaschine, gezeigt.

Die Leistung einer Bearbeitungsmaschine mißt man im allgemeinen an der Anzahl der angefertigten Werkstücke. Oft gibt es auch solche Bestandteile dieser Meßaufgabe - der Bestimmung der Anzahl der hergestellten Werkstücke - daß bei der Fertigung des Werkstückes zur Steuerung der Bearbeitungsmaschine ein Rücksignal gegeben werden muß. Dieses Signal kann z.B. zum Vorschub des notwendigen Materials für die Herstelllung des nächsten Werkstückes dienen. Es ist verständlich, daß man vermeiden muß, daß diese Reihenfolge aus irgendeinem Grund vertauscht wird, denn dies kann zur Schädigung der Arbeitsmaschine führen.

Diese Meßaufgabe, also das Anzeigen der Fertigstellung und der Ausgabe des Werkstückes aus der Einspannvorrichtung oder dem Preßwerkzeug wird in der Praxis auf verschiedene Weise gelöst. Unterschiedliche photoempfindliche Signalgeber (Photozelle, Photodiode) und auf Fließstoffe ansprechende Anlagen sind gut bekannt. Zur Erzeugung des zur Steuerung notwendigen Signals kann man das Werkstückgewicht ausnutzen, z.B. dadurch, daß man das Werkstück an eine Oberfläche anstoßen läßt, mit welcher ein Fühler verbunden ist. Es ist auch eine solche Lösung dieser Aufgabe bekannt, wo dieses den Stoß begleitende Tonsignal mit Hilfe eines Mikrofons in ein akustisches Signal umgesetzt wird.

Von den Registriereinrichtungen werden zum Tropfenzählen am verbreitetsten die photoempfindlichen Einrichtungen verwendet. Ein Teil dieser Fühler enthält bewegliche Elemente, die andere Gruppe, z.B. die photoempfindlichen Fühler, sind nur noch zum Registrieren einer geradlinigen Bewegung geeignet. In der Praxis kommt der Fall oft vor, daß man das Werkstück mit Preßluft aus dem Werkzeug herausbläst, wobei jedoch der zu zählende Körper entweder im freien Fall oder mit einer von Null abweichenden Anfangsgeschwindigkeit fällt und sich auf einer kaum definierten Bahn bewegt. Deren genaue Bestimmung - so daß sie zur geradlinigen Registrierung verwendbar ist - ist nicht immer möglich.

Die Erfinder haben erkannt, daß für das Zählen die Verwendung einer solchen Lösung zweckmäßig ist, die auf der durch den Einzelkörper hervorgerufenen Änderung in einem abgeschlossenen und überwachten elektromagnetischen Feld beruht.

Diese Lösung macht nämlich die räumliche Registrierung sogar mit Hilfe eines einzigen Senders und Empfängers möglich, denn der Durchgang des Einzelkörpers aus beliebigem Aggregatzustand stört den Raum, was durch den entsprechend ausgewählten Empfänger registrierbar ist.

Entsprechend der Erfindung löst man dieses Problem dadurch, daß man in einem geeigneten Resonator ein Mikrowellenfeld erzeugt und dessen durch den zu zählenden Einzelkörper verursachte Änderung feststellt.

Die Erfindung ist also zum Teil ein Verfahren zum Registrieren von durch einen Raumabschnitt hindurchbewegten festen oder flüssigen Einzelkörpern, wobei man in dem Raumabschnitt mindestens einen solchen physikalischen Parameter registriert, der sich bei dem Durchgang des Einzelkörpers durch den Raumabschnitt ändert. Gemäß der Erfindung werden in einem den Raumabschnitt enthaltenden Hohlraum ein Mikrowellenfeld erzeugt, und bei dem Durchgang des Einzelkörpers an irgendeinem Punkt des Hohlraumes die Änderung des Mikrowellenfeldes registriert. Zum anderen Teil ist die Erfindung eine Vorrichtung zum Registrieren von sich durch einen Raumabschnitt bewegenden festen oder flüssigen Einzelkörpern, wobei die Vorrichtung erfindungsgemäß einen den Raumabschnitt enthaltenden Mikrowellenfeldresonator aufweist und an einer Stelle des Raumresonators die das Mikrowellenfeld erzeugende Anlage, und an einer anderen Stelle eine das Mikrowellenfeld registrierende Diode angeordnet sind, an welche wenigstens ein Komparator angeschlossen ist.

Die Erfindung wird anhand bevorzugter Ausführungsformen erläutert, die aus der Zeichnung ersichtlich sind. In der Zeichnung zeigt:

Fig. 1    die Darstellung der Anordnung des Signalgebers in einer Ausführungsform der Vorrichtung,

Fig. 2    eine mögliche Gestaltung der signalaufbereitenden Einheit der Vorrichtung gemäß der Erfindung und

Fig. 3    die axonometrische Zeichnung einer anderen Ausführungsform der Vorrichtung gemäß der Erfindung.

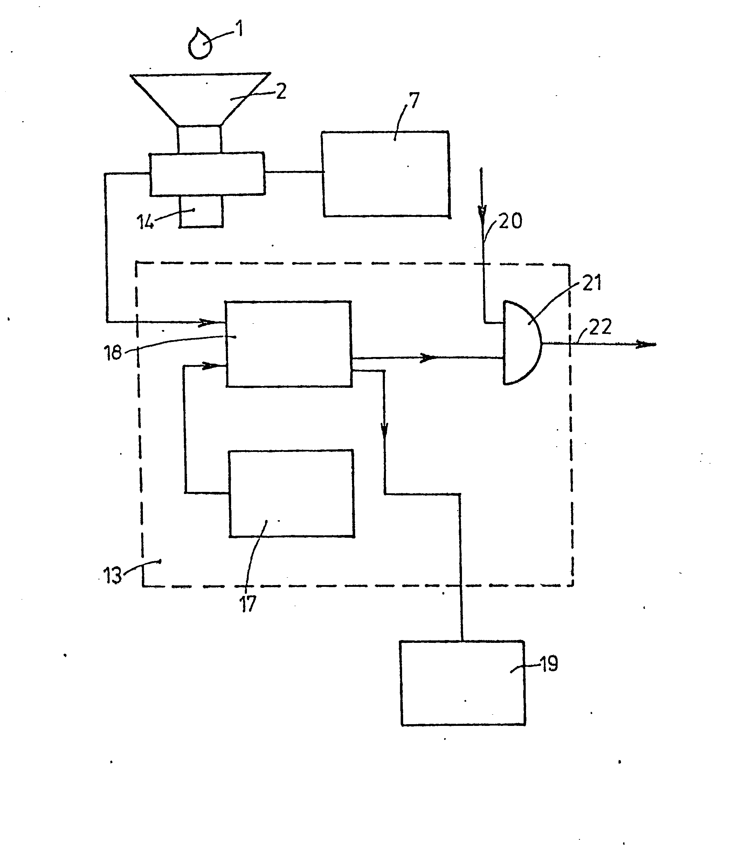

Wie bereits erwähnt, kann die erfindungsgemäße Vorrichtung für Preß- und sonstige Bearbeitungsmaschinen verwendet werden. Eine an diesen Anwendungszweck angepaßte Ausführungsform ist aus den Fig. 1 und 2 ersichtlich. Diese Ausführungsform ist an eine Maschine angeschlosssen, auf welcher Werkstücke von gegebener Geometrie hergestellt werden. Das Verfahren und die Vorrichtung entsprechend der Erfindung sind in unterschiedlicher Art ausführbar, deren Verwendungsmöglichkeit und dem Anwendungszweck entsprechende Funktionstüchtigkeit durch Experimente nachgewiesen sind. Im Weiteren wird eine der möglichen Varianten des der Erfindung entsprechenden Verfahrens bzw. der entsprechenden Vorrichtung erläutert.

Aus Fig. 1 ist die Signalgeberanlage im Längsschnitt ersichtlich. Der aus der das Werkstück herstellenden Maschine herausfliegende oder herausfallende Einzelkörper 1 bewegt sich auf irgendeiner Bahn und wird von einem im Ausführungsbeispiel als Trichter ausgebildeten Ablenkungsteil 2 aufgefangen. Dieses Ablenkungsteil leitet das Werkstück in den
Signalgeber weiter. Dieser Signalgeber besteht aus dem
Mikrowellengenerator 3, dem Koppelelement 4 und dem
Detektor 5. Die erforderliche Energie zum Betreiben des
im Mikrowellengenerator 3 untergebrachten, das Mikrowellenfeld erzeugenden Erregers 6, der vorzugsweise z.B. eine
Gunndiode ist, liefert das Netzteil 7.

Der Mikrowellenarbeitspunkt des signalerzeugenden Elementes
ist mit der Abstimmungsschraube 8 einstellbar. Der Erreger
6 erzeugt in dem vom Mikrowellengenerator 3, von dem
Koppelelement 4 und von dem Detektor 5 umschlossenen Raum
ein Mikrowellenfeld mit bestimmter elektromagnetischer
Feldstärke. Dieses Feld dringt auch in den von aus Isoliermaterial bestehenden Wänden 9 umgebenen Raumabschnitt 10
ein. Das so zustandegekommene Feld wird von der Registrierdiode 11 registriert, deren Mikrowellenarbeitspunkt mit der
Abstimmungsschraube 12 einstellbar ist. Diese Registrierdiode kann zweckmäßig eine Schottky-, Gunn- oder Nadeldiode
sein. Diese Registrierdiode 11 erzeugt eine der Feldstärke
des durch ihren Anordnungspunkt ausgebildeten Feldes entsprechende Gleichspannung, die in die signalaufbereitende
Einheit 13 gelangt. Der Signalgeber arbeitet wie folgt.

Der Einzelkörper 1 tritt aus dem Leitteil 2 in das Koppelelement 4 ein. Er durchläuft den von aus Isoliermaterialien
bestehenden Wänden 9 umgebenen, den von dem Koppelelement
4 gebildeten Hohlraumresonator 15 kreuzenden Raumabschnitt
10, an dessen einen Seite der Mikrowellengenerator 3 mit
dem Erreger 6, und an dessen entgegengesetzten Seite der
Detektor 5 mit der Registrierdiode 11 angeordnet sind.
Dabei ist die Lage des Einzelkörpers 1 beliebig. Bei seinem
Durchlauf verändert er die Verteilung des durch den Erreger
6 erzeugten Feldes, so daß sich auch im Bereich der Registrierdiode 11 die Feldstärke des elektromagnetischen Feldes ändert. Diese Veränderung wird von der Registrierdiode 11 in eine Spannungsänderung umgewandelt, die in die
signalaufbereitende Einheit 13 gelangt. Das Material des
zu registrierenden Einzelkörpers kann aus dem Gesichtspunkt des der Erfindung entsprechenden Registrierfunktionsprinzips ein Metall, ein Halbleiter oder ein Nichtleiter
bzw. deren beliebige Kombination sein. Der den von aus
Isolatormaterial bestehenden Wänden 9 umgebenen Raumabschnitt 10 durchlaufende Einzelkörper 1 wird aus dem
Resonator durch das Ausgabeteil 14 ausgebracht.

Die Dimensionierung des Generators 3, des Koppelelements 4
und des Detektors 5 erfolgt derart, daß sie zusammen den
Hohlraumresonator 15 bilden.

Die Abschirmung des im Koppelelement 4 aufgebauten elektromagnetischen Feldes gegen das Leitteil 2 und das Ausgabeteil 14 wird in an sich bekannter Weise durch die Mikrowellenfilter 16A und 16B gesichert.

Der Anschluß des Signalgebers an die signalaufbereitende
Einheit 13 und deren möglicher Aufbau sind aus Fig. 2 ersichtlich. Das Signal des Signalgebers wird am Eingang der
signalaufbereitenden Einheit 13 mit einem Referenzsignal
verglichen, welches von der Referenzsignalquelle 17 geliefert wird. Hierdurch wird an der Registrierdiode 11 die
durch die Feldstärke des vor dem Durchgang des Einzelkörpers 1 aufgebauten Feldes erzeugte Spannungskompensation
ermöglicht. Wenn der Einzelkörper 1 das Koppelelement 4
durchläuft und das dort befindliche elektromagnetische Feld
ändert, dann weicht die Spannung des Signalgebers von der
Referenzspannung ab, so daß am Ausgang des Komparators 18
ein entsprechendes elektrisches Signal erscheint. Dieses
Signal ist bereits so umformbar, daß es an irgendeinen
Zähler 19 gegeben werden kann. Das Signal des Komparators
18 kann zusätzlich auch auf das Tor eines UND-Gliedes gegeben werden, so daß es beispielsweise im Falle der gleichzeitigen Anwesenheit des den Maschinenvorschub steuernden Signals auch das den Vorschub des für die Herstellung des Werkstückes erforderlichen Materials steuernde Signal liefert.

Im Sinne der Fig. 2 kann man parallel zu der Leitung, die das den Vorschub steuernde Signal liefert, auch Signale, die auf die Betriebsbereitschaft sonstiger Funktionen hinweisen (z.B. Unfallverhütung) auf das logische Tor 21 führen; so kann das Signal der Ausgangsleitung 22 von mehreren Vorgängen abhängen.

Die den Gegenstand der Erfindung bildende Vorrichtung ist auch dazu verwendbar, bei Preß- oder sonstigen Maschinen zu verhindern, daß bis zum Ausbringen des hergestellten Werkstückes das für die Herstellung des nächsten Werkstückes notwendige Material in das Werkzeug gelangt.

Die zu registrierenden Einzelkörper stören das Mikrowellenfeld in Abhängigkeit von ihrem Material, ihrer Größe und ihrer Durchgangsgeschwindigkeit. Daher ist auch die von dem Detektor abgegebene Spannungsänderung unterschiedlich. Diese Eigenschaft der Vorrichtung kann man dazu verwenden, daß sie nur auf Werkstücke vorgegebener Art reagiert. Dies wird mit einem entsprechenden elektronischen Aufbau der Referenzsignalquelle 17 und des Komparators 18 erreicht. Wenn der Komparator 18 in seiner Empfindlichkeit einstellbar konzipiert wird, kann die Ausgangsspannungsänderung der signalaufbereitenden Einheit vorbestimmt werden, bei der der Komparator 18 einen Impuls ausgibt. Mit erhöhter Empfindlichkeit gibt der Komparator 18 auch bei kleineren Spannungsänderungen des Signalgebers einen Ausgangsimpuls ab. Ferner können mehrere parallel geschaltete Komparatoren verwendet werden, die mit unterschiedlichen Referenzwerten arbeiten, oder es kann ein Komparator mit mehreren unterschiedlichen Eingangsvergleichsniveaus und dementsprechend mehreren Ausgängen verwendet werden.

Wie einleitend angegeben, ist die der Erfindung entsprechende signalgebende Vorrichtung auch zur Registrierung des Durchgangs von diskreten Flüssigkeitsmengen - z.B. von Tropfen - zum Zählen derselben in Abhängigkeit ihres Durchgangs anwendbar. Eine derartige Aufgabe stellt sich z.B. beim Blutaustausch, bei dem nicht nur die Menge des durchströmenden Blutes, sondern auch die Stetigkeit des Durchströmens überprüft werden muß. Hier strömt die Flüssigkeit - und auch in vielen ähnlichen Fällen - durch Röhren aus Isoliermaterial hindurch. Auch in diesem Falle kann man die der Erfindung entsprechende Vorrichtung vorteilhaft verwenden, denn man kann sie ohne Zerlegung der ursprünglichen Anordnung nachträglich an das vorhandene Gerät anschließen. Daher sind die Probleme der Sterilisierung und chemischen Unverträglichkeit vermeidbar.

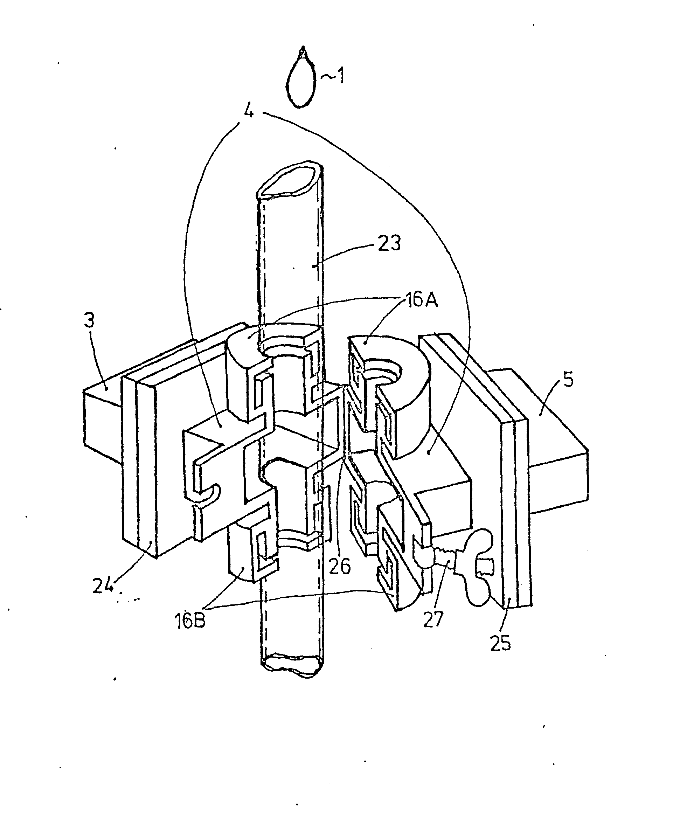

Eine derartige in das Gerät ohne dessen Zerlegung einbaubare Vorrichtung ist aus Fig. 3 ersichtlich. Bedingung für die Verwendbarkeit der Vorrichtung ist hier, daß die zu kontrollierende Flüssigkeit durch einen Schlauch aus Isolierstoff oder durch einen durch ein derartiges Material umgrenzten Raumabschnitt hindurchfließt. Die Vorrichtung, deren Grundaufbau derjenigen aus Fig. 1 entspricht, ist für diesen Anwendungszweck in ihre beiden Hälften 24, 25 geteilt, die über ein Gelenkband 26 schwenkbar miteinander verbunden sind, so daß sie um das die Flüssigkeit führende Rohr 23 zusammengeschwenkt werden können und dieses dann umschließen. Im zusammengeschwenkten Zustand werden die Vorrichtungshälften 24 und 25 aneinander und an dem Rohr 23 mittels des Schraubenklemmelementes 27 befestigt. Durch die Vereinigung der beiden Halbteile 24, 25 ist das Koppelelement 4 betriebsbereit, in welchem das durch den Mikrowellenfelderreger erzeugte Feld entsteht. Dieses erzeugt an der Registrierdiode 11 ein entsprechendes Spannungsniveau, welches entsprechend Fig. 2 mittels der Referenzsignalquelle kompensiert werden muß. Bei dem Durchgang jedes Tropfens durch das Feld wird an der Registrierdiode

11 das Spannungsniveau geändert und in der oben angegebenen Weise erfolgt die weitere Signalaufbereitung. Aus Fig. 3 sind die Mikrowellenfilter 16A und 16B gut ersichtlich, die in an sich bekannter Weise das Austreten des elektromagnetischen Feldes aus dem Resonator verhindern.

Patentansprüche

1. Verfahren zum Registrieren von durch einen Raumabschnitt bewegten festen oder flüssigen Einzelkörpern, bei welchem an dem Raumabschnitt wenigstens ein derartiger physikalischer Parameter registriert wird, der sich bei dem Durchgang des Einzelkörpers durch den Raumabschnitt ändert, dadurch gekennzeichnet, daß in einem den Raumabschnitt enthaltenden Hohlraum ein Mikrowellenfeld erzeugt wird und an irgendeiner Stelle des Hohlraumes die Änderung des Mikrowellenfeldes beim Durchgang des Einzelkörpers abgefühlt wird.

2. Verfahren nach Anspruch 1, dadurch gekennzeichnet, daß in dem Hohlraum ein stehendes Mikrowellenfeld erzeugt wird.

3. Verfahren nach Anspruch 1 oder 2, dadurch gekennzeichnet, daß die Änderung des Mikrowellenfeldes durch die Messung irgendeines elektromagnetischen Parameters abgefühlt wird und der gemessene Wert mit mindestens einem Referenzwert verglichen wird.

4. Verfahren nach Anspruch 3, dadurch gekennzeichnet, daß zur Registrierung der Materialqualität und/oder der Größe des Einzelkörpers der gemessene Wert mit mehreren Referenzwerten verglichen wird.

5. Vorrichtung zum Registrieren von durch einen Raumabschnitt (10) bewegten festen oder flüssigen Einzelkörpern (1), zur Durchführung des Verfahrens nach Anspruch 1, dadurch gekennzeichnet, daß ein den Raumabschnitt (10) enthaltender Mikrowellen-Hohlraumresonator (15) vorgesehen ist, an der einen Stelle des Hohlraumresonators (15) ein das Mikrowellenfeld erzeugender Erreger (6), und an einer anderen Stelle eine auf das Mikrowellenfeld ansprechende Diode (11) angeordnet sind, und an die Registrierdiode (11) mindestens ein Komparator (18) angeschlossen ist.

6. Vorrichtung nach Anspruch 5, dadurch gekennzeichnet, daß an den von dem Einzelkörper (1) passierten Öffnungen des Hohlraumresonators (15) je ein Mikrowellenfilter (16A, 16B) angeordnet ist.

7. Vorrichtung nach Anspruch 5 oder 6, dadurch gekennzeichnet, daß der das Mikrowellenfeld erzeugende Erreger (6) und die Registrierdiode (11) in dem Hohlraumresonator (15) an einander entgegengesetzten Seiten des dem Durchgang des Einzelkörpers (1) dienenden Raumabschnittes (10) angeordnet sind.

8. Vorrichtung nach Anspruch 7, dadurch gekennzeichnet, daß der dem Durchgang des Einzelkörpers (1) dienende Raumabschnitt (10) gegen den Hohlraumresonator (15) mit einer aus Isoliermaterial bestehenden Wand (9) abgegrenzt ist.

9. Vorrichtung nach Anspruch 7 oder 8, dadurch gekennzeichnet, daß der Hohlraumresonator (15) aus einem den dem Durchgang des Einzelkörpers (1) dienenden Raumabschnitt (10) enthaltenden Koppelelement (4), einem an dessen Seite befestigten Mikrowellengenerator (3) und einem an der anderen Seite des Koppelelementes (4) befestigten Mikrowellendetektor (5) gebildet ist.

10. Vorrichtung nach Anspruch 8, dadurch gekennzeichnet, daß die aus Isoliermaterial bestehende Wand (9) von einem aus Isoliermaterial bestehenden Rohr (23) gebildet ist und der Hohlraumresonator (15) von zwei aneinanderliegenden und das Rohr (23) umfassenden Halbteilen (24, 25) gebildet ist, von denen das eine Halbteil (24) den Generator (3), und das andere Halbteil den Detektor (5) aufweisen.

11. Vorrichtung nach Anspruch 10, dadurch gekennzeichnet, daß die den Hohlraumresonator (15) bildenden beiden Halbteile (24, 25) gegeneinander verschwenkbar miteinander verbunden sind.

12. Vorrichtung nach einem der Ansprüche 5 bis 11, dadurch gekennzeichnet, daß die Mikrowellen registrierende Diode (11) eine Schottky-, Gunn- oder Nadeldiode ist.

13. Vorrichtung nach einem der Ansprüche 5 bis 12, dadurch gekennzeichnet, daß der die Mikrowellen erzeugende Erreger (6) eine Gunndiode ist.

14. Vorrichtung nach einem der Ansprüche 5 bis 13, dadurch gekennzeichnet, daß an die Mikrowellen registrierende Diode (11) entweder ein über mehrere Eingangskomparationsniveaus und dementsprechend über mehrere Ausgänge verfügender Komparator (18) oder mehrere Komparatoren mit voneinander abweichenden Komparationsniveaus parallel zueinander angeschlossen sind (Fig. 2).

0064621

0064621

0064621